# EUROPEAN PATENT SPECIFICATION

(11) **EP 2 056 025 B1**
(45) Date of publication and mention of the grant of the patent: **23.05.2018**
(21) Application number: 07792008.0
(22) Date of filing: 06.08.2007
(51) Int. Cl.: F24D 3/18, F24D 3/02, F24D 3/08, F24D 3/10, F24F 5/00, F24H 1/00, F24D 19/10, F24D 11/02

(54) **HOT WATER CIRCULATION HEATING SYSTEM FOR HEATING BUILDING BY HOT WATER CIRCULATION**
WARMWASSERZIRKULATIONSSYSTEM ZUM HEIZEN EINES GEBÄUDES DURCH HEISSWASSERZIRKULATION
SYSTÈME DE CHAUFFAGE À CIRCULATION D'EAU CHAUDE PERMETTANT DE CHAUFFER UN BÂTIMENT PAR CIRCULATION D'EAU CHAUDE

(30) Priority: 07.08.2006 JP 2006215113
(43) Date of publication of application: 06.05.2009
(73) Proprietor: Daikin Industries, Ltd., Osaka 530-8323 (JP)
(72) Inventor: TAIRA, Shigeharu, c/o Shiga Plant, Shiga 525-8526 (JP)
(74) Representative: Hoffmann Eitle
(86) International application number: PCT/JP2007/065335
(87) International publication number: WO 2008/018397

(56) References cited:
- AT-B- 364 580
- CH-A5- 671 622
- JP-A- 07 280 303
- JP-A- 10 266 351
- JP-A- 2000 179 891
- JP-A- 2000 241 037
- JP-A- 2004 218 910
- JP-A- 2004 232 914
- JP-A- 2004 286 292
- JP-A- 2005 195 313
- JP-A- 2006 017 376
- JP-A- 2006 162 178
- JP-B2- 3 744 495

## Description

### TECHNICAL FIELD

The present invention relates to a hot water circulation heating system and a cold water/hot water circulation cooling/heating system and particularly to a hot water circulation heating system that performs heating by causing hot water to circulate in a building.

### BACKGROUND ART

Conventionally, hot water circulation heating systems that perform heating of a building by generating hot water with a boiler or an electric heater and cause that hot water to circulate in radiators disposed in each room inside the building have spread centering on cold regions such as Europe. For example, in the air conditioning system disclosed in patent citation 1, cold water/hot water supplying means that supply cold water/hot water are installed outdoors of a house or underground, and hot water is supplied to heat exchangers or floor heating devices disposed in each room so that the air conditioning system can perform heating of the rooms.

Further, patent citation 2 discloses a hot water supply system for supplying high temperature hot water to a floor heating panel, and heat supply hot and cold water by circulating the hot water flowing out of the floor heating panel to a second hot water supply heat exchanger. This document discloses the preamble of claim 1.
Patent Citation 1: JP-ANo. 10-266351
Patent Citation 2: JP 2004 286 292 A

### DISCLOSURE OF THE INVENTION

### <Technical Problem>

In the air conditioning system of patent citation 1, the cold water/hot water supplying means are installed outdoors, and it is conceivable that, in consideration of the fact that the system employs a heat pump that excels in thermal efficiency as a heat source that performs heating or the like in order to create the cold water/hot water, depending on the arrangement of the components of the air conditioning system, the degree of improvement in thermal efficiency will end up becoming smaller in comparison to when the system employs a boiler or an electric heater as a heat source. Thus, the merit of employing a heat pump ends up becoming smaller.

Further, when a heat pump is employed as a heat source in an air conditioning system that causes hot water or the like to circulate indoors, further improvement in thermal efficiency is also desired.

It is an object of the present invention to provide a hot water circulation heating system and a cold water/hot water circulation cooling/heating system, which are air conditioning systems that cause hot water or the like to circulate indoors, whose thermal efficiency is high and with which energy conservation can be achieved.

### <Solution to the Problem>

A hot water circulation heating system according to a first aspect of the invention is defined in claim 1. In particular, this aspect relates to a hot water circulation heating system which performs heating by causing hot water to circulate in a building and comprises a tank that stores the hot water, a room radiator, a first circulation pump, a vapor compression heat pump for heating the hot water, and a second circulation pump. The room radiator is disposed in a room of the building and causes heat that the hot water has to radiate into room air of the room. The first circulation pump causes the hot water to flow from the tank to the room radiator and returns the hot water that has performed heat radiation in the room radiator back to the tank. The second circulation pump causes the hot water to flow from the tank to the heat pump and returns the hot water from the heat pump back to the tank. The heat pump includes a compressor, a radiator, an expansion mechanism and an evaporator and heats the hot water that flows out from the tank by heat emitted from the radiator.

Here, the hot water that flows out from the tank to the radiator by actuation of the second circulation pump is heated by heat emitted from the radiator by actuation of the heat pump. Thus, hot water of a high temperature of 70°C, for example, can be returned to the tank. When this hot water of a high temperature is sent to the room radiator in the room by actuation of the first circulation pump, the heat of the hot water moves to the room air of the room, and the room is heated. Additionally, hot water whose temperature has dropped to about 10°C to 40°C, for example, returns back to the tank. This hot water whose temperature has dropped is again heated to a high temperature by actuation of the heat pump. In this manner, here, a first loop in which the hot water circulates between the tank and the heat pump and a second loop in which the hot water circulates between the tank and the room radiator are formed, the hot water circulates in the respective loops, and heat collected from the outdoors by actuation of the heat pump and heat generated by actuation of the compressor eventually moves to the room air of the room via the hot water stored in the tank.

Additionally, here, the system employs a configuration where the hot water in the tank is guided to the heat pump by the second circulation pump and where the hot water that has been heated by the heat pump is returned back to the tank, so, for example, when the heat pump is installed outdoors and the tank is installed indoors, the tank is not exposed to cold air outdoors, a drop in the temperature of the hot water inside the tank is controlled, and heat can be taken from the air outdoors (outside air) by the heat pump. In this manner, according to the first aspect of the invention, a large quantity of hot water of a high temperature can be efficiently ensured in the tank.

It will be noted that the room radiator may be of whatever configuration, such as radiators, pipes for heating floors, fan coil units, or combinations of those. Further, it suffices for the hot water that is stored in the tank and circulated to be a liquid, and the hot water does not have to be water (H₂O).

A hot water circulation heating system according to a second aspect of the invention is the hot water circulation heating system according to the first aspect of the invention, wherein the heat pump is installed outdoors, and the tank is installed indoors.

Here, heat is taken from the air outdoors by the heat pump, and the tank is installed indoors, so a drop in the temperature of the hot water inside the tank can be kept small.

A hot water circulation heating system according to a third aspect of the invention is the hot water circulation heating system according to the first or second aspect of the invention and further comprises a controller. The controller controls a device incidental to the heat pump and a device incidental to the tank on the basis of signals inputted from the outside.

Here, the controller controls devices incidental to the heat pump and the tank on the basis of various outside signals from a room temperature sensor and sensors that measure the temperature of the hot water inside the tank and the like, so the heat pump can be optimally operated.

A hot water circulation heating system according to a fourth aspect of the invention is the hot water circulation heating system according to any of the first to third aspects of the invention, wherein operation of the heat pump stops when the temperature of the hot water that returns from the room radiator to the tank is higher than a first setting temperature and a room temperature of the room is higher than a second setting temperature. Further, operation of the heat pump is resumed when the room temperature of the room becomes lower than a third setting temperature or when the room temperature of the room continues to be lower for a certain period of time than the third setting temperature. It will be noted that the third setting temperature is a setting temperature that is lower than the second setting temperature.

When the room temperature of the room rises, the temperature of the building skeleton of the building also rises, and the system moves to a state where it can maintain the room temperature of the room even when the capacity of the hot water circulation heating system is made smaller. In light of this, here, the system is configured to cause the heat pump to stop operation when the temperature of the hot water that returns from the room radiator to the tank is higher than the first setting temperature and the room temperature of the room is higher than the second setting temperature. Thus, the system can conserve energy. Further, the room temperature of the room gradually drops even if there is stored heat in the building skeleton when the operation of the heat pump is continued to be stopped, so the system resumes operation of the heat pump when the room temperature becomes lower (or continues to be lower for a certain period of time) than the third setting temperature. Thus, the system can conserve energy and ensure that the room temperature of the room does not drop too much.

It will be noted that it is conceivable to use the temperature of waterworks water, for example, as the first setting temperature that is a threshold value of the temperature of the hot water that returns from the room radiator to the tank when the system stops operation of the heat pump.

Further, the fourth aspect of the invention becomes particularly effective in a building such as a house whose building skeleton heat storage quantity is large and which is difficult to become cool after it has been warmed once. For example, the building skeleton heat storage quantity becomes larger in a house or the like whose outer walls are created by brick or stone.

A hot water circulation heating system according to a fifth aspect of the invention is the hot water circulation heating system according to any of the first to third aspects of the invention, wherein the compressor of the heat pump is capable of having its capacity varied by inverter control. Additionally, first control to bring an inverter frequency of the compressor close to a minimum frequency is performed when the temperature of the hot water that returns from the room radiator to the tank is higher than a first setting temperature and a room temperature of the room is higher than a second setting temperature. Further, the system cancels the first control when the room temperature of the room becomes lower than a third setting temperature or when the room temperature of the room continues to be lower for a certain period of time than the third setting temperature. It will be noted that the third setting temperature is a setting temperature that is lower than the second setting temperature.

When the room temperature of the room rises, the temperature of the building skeleton of the building also rises, and the system moves to a state where it can maintain the room temperature of the room even when the capacity of the hot water circulation heating system is made smaller. In light of this, here, the system is configured to bring the inverter frequency of the compressor close to the minimum frequency when the temperature of the hot water that returns from the room radiator to the tank is higher than the first setting temperature and the room temperature of the room is higher than the second setting temperature. Thus, the system can conserve energy. Further, when the system continues to make the frequency of the compressor of the heat pump smaller, the room temperature of the room gradually drops even if there is stored heat in the building skeleton, so the system cancels the first control that brings the inverter frequency of the compressor close to the minimum frequency when the room temperature becomes lower (or continues to be lower for a certain period of time) than the third setting temperature. Thus, the system can conserve energy and ensure that the room temperature of the room does not drop too much.

A hot water circulation heating system according to a sixth aspect of the invention is the hot water circulation heating system according to the fifth aspect of the invention, wherein the first control sets the inverter frequency of the compressor to the minimum frequency.

Here, in light of the fact that, when the compressor is stopped and operation of the heat pump is stopped, there is the potential for electrical power consumption to become larger and for the energy consumption quantity to increase during restarting and for the lifespan of the heat pump to be shortened, the system is configured to set the inverter frequency of the compressor to the minimum frequency when the system reaches a state where it is alright to drop the heating capacity.

It will be noted that the fifth and sixth aspects of the invention become particularly effective in a building such as a house whose building skeleton heat storage quantity is large and which is difficult to become cool after it has been warmed once.

A hot water circulation heating system according to a seventh aspect of the invention is the hot water circulation heating system according to any of the first to sixth aspects of the invention, wherein the heat pump uses carbon dioxide as a refrigerant.

A hot water circulation heating system according to an eighth aspect of the invention is the hot water circulation heating system according to any of the first to sixth aspects of the invention, wherein the heat pump uses a fluorocarbon refrigerant as a refrigerant. The fluorocarbon refrigerant may be, for example, an HFC refrigerant such as a refrigerant called R410A, a refrigerant called R407C, or a refrigerant called R32.

A hot water circulation heating system according to a ninth aspect of the invention is the hot water circulation heating system according to any of the first to sixth aspects of the invention, wherein the heat pump uses a fluorocarbon refrigerant whose GWP is equal to or less than 200 as a refrigerant. "GWP" means global warming potential and is a value based on carbon dioxide and represents the effect of warming that a greenhouse gas will exert over 100 years.

A hot water circulation heating system according to a tenth aspect of the invention is the hot water circulation heating system according to any of the first to sixth aspects of the invention, wherein the heat pump uses an HC refrigerant that is a natural refrigerant as a refrigerant. The HC refrigerant that is a natural refrigerant may be, for example, propane or butane.

A cold water/hot water circulation cooling/heating system according to an eleventh aspect performs cooling/heating by causing cold water/hot water to circulate in a building and comprises a tank, a room heat exchanger, a first circulation pump, a vapor compression heat pump, and a second circulation pump. The tank stores the cold water/hot water. The room heat exchanger is disposed in a room of the building and cools/heats room air of the room by heat that the cold water/hot water has. The first circulation pump causes the cold water/hot water to flow from the tank to the room heat exchanger and returns the cold water/hot water that has cooled/heated the room air in the room heat exchanger back to the tank. The second circulation pump causes the cold water/hot water to flow from the tank to the heat pump and returns the cold water/hot water from the heat pump back to the tank. The heat pump includes a compressor, a radiator, an expansion mechanism and an evaporator and cools/heats the cold water/hot water that flows out from the tank.

Here, the cold water/hot water that flows out from the tank to the heat pump by actuation of the second circulation pump is cooled/heated in the heat pump. When this cold water/hot water is sent to the room heat exchanger by actuation of the first circulation pump, the heat of the cold water/hot water moves to the room air of the room, and the room is cooled/heated. Additionally, the cold water/hot water that has been returned to the tank is again cooled/heated by actuation of the heat pump. In this manner, here, a first loop in which the cold water/hot water circulates between the tank and the heat pump and a second loop in which the cold water/hot water circulates between the tank and the room heat exchanger are formed, the cold water/hot water circulates in the respective loops, and heat collected from the outside by actuation of the heat pump and heat (cold heat/hot heat) generated by actuation of the compressor eventually moves to the room air of the room via the cold water/hot water that is stored in the tank.

Additionally, here, the system employs a configuration where the cold water/hot water in the tank is guided to the heat pump by the second circulation pump and where the cold water/hot water that has been cooled/heated by the heat pump is returned back to the tank, so, for example, when the heat pump is installed outdoors and the tank is installed indoors, the tank is not exposed to cold air outdoors, a change in temperature of the cold water/hot water inside the tank is small, and heat can be taken from the air outdoors (outside air) by the heat pump. In this manner, according to the eighth aspect of the invention, a large quantity of cold water/hot water can be efficiently ensured at a desired temperature in the tank.

### <Advantageous Effects of the Invention>

According to the first aspect of the invention and the eleventh aspect, a large quantity of cold water or hot water can be efficiently ensured at a desired temperature in the tank, and the system becomes one whose thermal efficiency is high and with which energy conservation can be achieved.

According to the second aspect of the invention, heat is taken from the outdoor air by the heat pump, and the tank is installed indoors, so a drop in the temperature of the hot water inside the tank can be kept small.

According to the third aspect of the invention, the heat pump can be optimally operated.

According to the fourth aspect of the invention, the system can conserve energy and ensure that the room temperature of the room does not drop too much.

According to the fifth aspect and the sixth aspect of the invention, the system can conserve energy and ensure that the room temperature of the room does not drop too much.

### BRIEF DESCRIPTION OF THE DRAWINGS

FIG. 1 is a diagram showing part of the configuration of a hot water circulation heating system pertaining to an embodiment of the present invention.
FIG. 2 is a diagram showing part of the configuration of the hot water circulation heating system.
FIG. 3 is a diagram showing part of the configuration of the hot water circulation heating system.
FIG. 4 is a control block diagram of the hot water circulation heating system.
FIG. 5 is a diagram showing a flow of energy conservation control utilizing building skeleton heat storage.
FIG. 6 is a diagram showing the flow of the energy conservation control utilizing building skeleton heat storage.
FIG. 7 is a diagram (T-h line diagram) showing a heat pump cycle when a return temperature, to a tank 40, of hot water that has been supplied for heating is high.
FIG. 8 is a diagram (T-h line diagram) showing a heat pump cycle when a return temperature, to the tank 40, of hot water that has been supplied for heating is low.
FIG. 9 is a diagram showing part of the configuration of a hot water circulation heating system of modification (A).

### EXPLANATION OF THE REFERENCE NUMERALS

- 10: Heat Pump
- 11: Compressor
- 12: Radiator
- 13: Expansion Valve (Expansion Mechanism)
- 14: Evaporator
- 25: Hot Water Heating-Use Circulation Pump (Second Circulation Pump)
- 40: Tank
- 51: Indoor Heating-Use Circulation Pump (First Circulation Pump)
- 61, 62: Room
- 61a, 62a: Room Radiator
- T1: First Setting Temperature
- T2: Second Setting Temperature
- T3: Third Setting Temperature
- Trm: Room Temperature

### BEST MODE FOR CARRYING OUT THE INVENTION

### <Main Configuration of Hot Water Circulation Heating System>

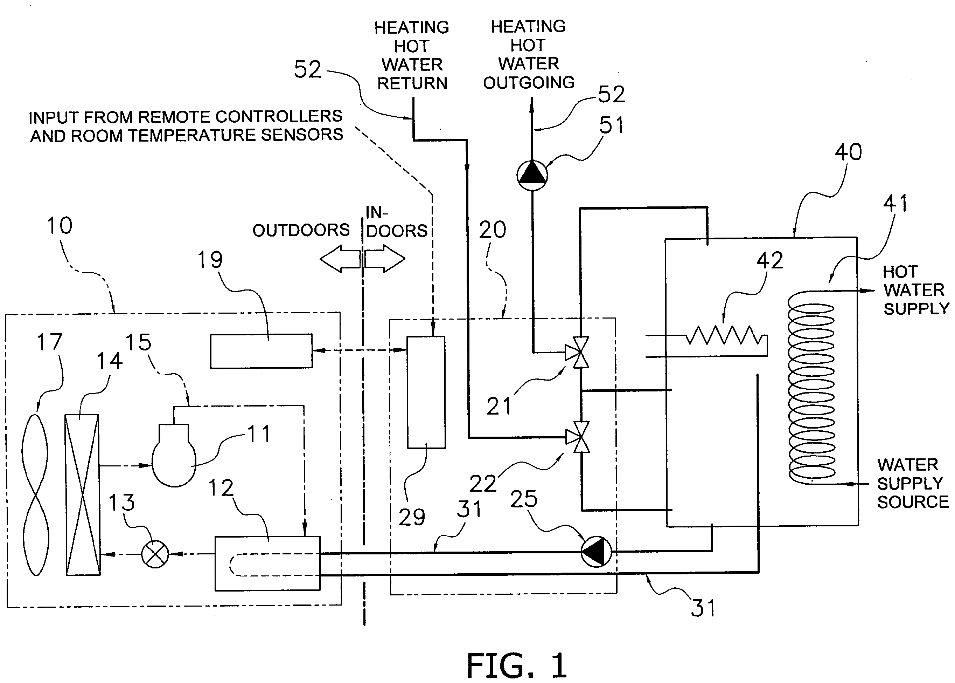

FIG. 1 to FIG. 3 show the configuration of a hot water circulation heating system pertaining to an embodiment of the present invention. The hot water circulation heating system performs heating by causing hot water to circulate in a building and has a hot water supplying function. The hot water circulation heating system is disposed with a tank 40 that stores the hot water, room radiators 61a and 62a, bathroom radiators 69b, 69c and 69e, an indoor heating-use circulation pump 51, a vapor compression heat pump 10 for heating the hot water, a hot water heating-use circulation pump 25, a hot water supply-use heat exchanger 41, a heated water spraying device 75 and a control unit 20.

The room radiators 61a and 62a are disposed in rooms 61 and 62 of the building and cause heat that the hot water has to radiate into room air of the rooms 61 and 62.

The bathroom radiators 69b, 69c and 69e are disposed in a bathroom 69 of the building and cause the heat that the hot water has to radiate inside the bathroom 69.

The indoor heating-use circulation pump 51 causes the hot water to flow from the tank 40 to the room radiators 61a and 62a and the bathroom radiators 69b, 69c and 69e and returns the hot water that has performed heat radiation in the room radiators 61a and 62a and the bathroom radiators 69b, 69c and 69e back to the tank 40. The hot water that has left the tank 40 flows through the room radiators 61a and 62a, thereafter flows through the bathroom radiators 69b, 69c and 69e, and returns to the tank 40.

The heat pump 10 includes a compressor 11, a radiator 12, an expansion valve 13 and an evaporator 14, takes heat from outside air by the evaporator 14, and heats the hot water that flows out from the tank 40 by heat emitted from the radiator 12.

The hot water heating-use circulation pump 25 causes the hot water to flow from the tank 40 to the radiator 12 of the heat pump 10 and returns the hot water from the radiator 12 of the heat pump 10 back to the tank 40.

The hot water supply-use heat exchanger 41 is disposed inside the tank 40, causes heat exchange between water that has been taken in from a water supply source and the hot water inside the tank 40, heats the water, and supplies the hot water to a hot water supply pipe 72 of the building. The water that is heated by the hot water supply-use heat exchanger 41 and supplied to the hot water supply pipe 72 will hereinafter be called heated water. It will be noted that the water that is taken in from the water supply source and supplied to the hot water supply pipe 72 and the hot water inside the tank 40 do not mix with each other.

The heated water spraying device 75 is a device that sprays the outer surface of the evaporator 14 of the heat pump 10 with the heated water that is supplied from the hot water supply-use heat exchanger 41 to the hot water supply pipe 72.

It will be noted that, here, ordinary water is used for the hot water that is stored in the tank 40 and circulated in a closed loop by the indoor heating-use circulation pump 51 and the hot water heating-use circulation pump 25, but it suffices for the hot water to be a liquid, and the hot water does not invariably have to be water (H₂O). If there is a liquid that can reduce the motive power of the indoor heating-use circulation pump 51 and the hot water heating-use circulation pump 25 and can make the sizes of pipes 52 and 31 and the like that become circulation routes smaller than water (H₂O), it is desirable to use that liquid.

### <General Operation of Hot Water Circulation Heating System>

In the hot water circulation heating system, the hot water that flows out from the tank 40 to the radiator 12 of the heat pump 10 by actuation of the hot water heating-use circulation pump 25 is heated using the heat emitted from the radiator 12 by actuation of the heat pump 10. Thus, hot water of a high temperature of about 70°C is returned from the heat pump 10 to the tank 40. Meanwhile, the hot water inside the tank 40 is sent to the room radiators 61a and 62a in the rooms 61 and 62 and the bathroom radiators 69b, 69c and 69e in the bathroom 69 by actuation of the indoor heating-use circulation pump 51. The heat of the hot water moves to the room air of the rooms 61 and 62 and around the bathroom radiators 69b, 69c and 69e, the rooms 61 and 62 are heated, and, in the bathroom 69 also, rinse water inside a toilet tank 69a and a toilet seat 69d and the like are heated. Then, the hot water whose temperature has dropped to about 10°C to 20°C is returned back to the tank 40. This hot water whose temperature has dropped is again heated to a high temperature by actuation of the heat pump 10.

In this manner, here, a first loop in which the hot water circulates between the tank 40 and the heat pump 10 that are interconnected by the pipe 31 and a second loop in which the hot water circulates between the tank 40 and the room radiators 61a and 62a and the bathroom radiators 69b, 69c and 69e that are interconnected by the pipe 52 are formed, and the hot water circulates in the respective loops. Thus, heat collected from the outdoors by actuation of the heat pump 10 and heat generated by actuation of the compressor 11 eventually move to the room air of the rooms 61 and 62 and to each portion of the bathroom 69 via the hot water stored in the tank 40.

Further, the inside of the tank 40 is equipped with the hot water supply-use heat exchanger 41, and the water that has been taken in from the water supply source takes heat from the hot water inside the tank 40 when it passes through the hot water supply-use heat exchanger 41, becomes heated water, and flows out to the hot water supply pipe 72 of the building. This heated water that has flowed to the hot water supply pipe 72 is used in a shower 73 and a bathtub 74 and the like. Moreover, some of the heated water that has flowed to the hot water supply pipe 72 is sprayed on the outer surface of the evaporator 14 of the heat pump 10 by the heated water spraying device 75. This spraying is performed periodically at the time of a predetermined condition where frost forms on the evaporator 14 of the heat pump 10.

### <Detailed Configuration of Tank 40>

The tank 40 is installed indoors. Plural temperature sensors (thermistors) 40a to 40e are disposed in the tank 40 for the purpose of measuring the temperature of the hot water at several different height positions. The hot water inside the tank 40 is such that, naturally, the upper portion thereof becomes a high temperature and the lower portion thereof becomes a low temperature. Hot water of a high temperature that has been heated by the heat pump 10 is, as shown in FIG. 1, returned to the vicinity of the center in the height direction of the tank 40. Hot water of a low temperature proceeds from the lower portion of the tank 40 to the heat pump 10. Meanwhile, the hot water proceeds from the upper portion and the central portion of the tank 40 to the room radiators 61a and 62a in the rooms 61 and 62, and hot water of a low temperature that returns from the bathroom radiators 69b, 69c and 69e is returned to the lower portion and the central portion of the tank 40.

Further, the tank 40 is, in addition to the aforementioned hot water supply-use heat exchanger 41, equipped with a booster heater 42 that is used when the heating capacity of the heat pump 10 is insufficient. The booster heater 42 is an electric heater, is actuated when a later-described comprehensive controller 29 judges that it is necessary to raise the temperature of the hot water inside the tank 40 and does not foresee a desired rise in the temperature of the hot water by just the heating capacity of the heat pump 10, and heats the hot water inside the tank 40 together with the heat pump 10.

### <Detailed Configuration of Heat Pump 10>

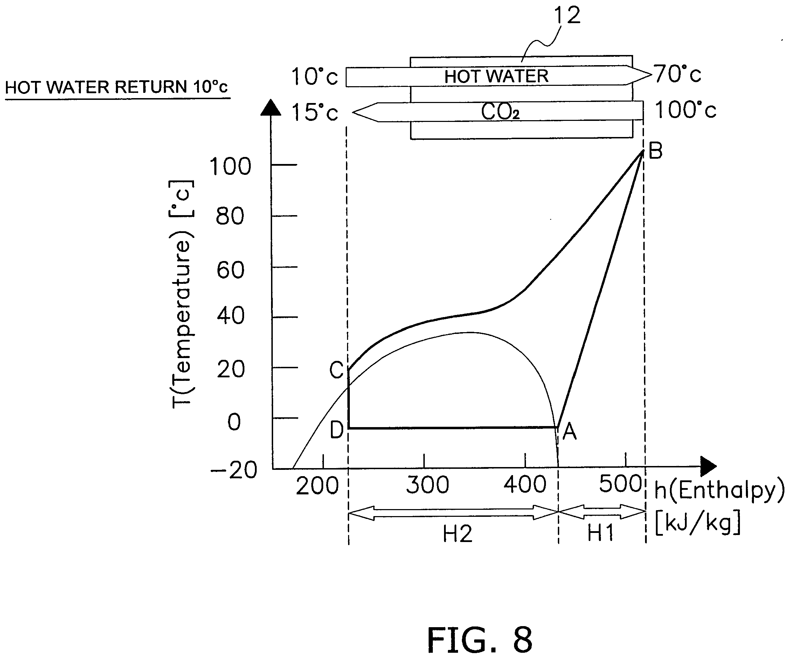

The heat pump 10 is installed outdoors, includes the compressor 11, the radiator 12, the expansion valve (electrically powered expansion valve) 13 and the evaporator 14 that are interconnected by a refrigerant pipe 15 and configure a refrigeration cycle, and is disposed with a fan 17 for blowing outside air onto the evaporator 14 and a heat pump control unit 19. As a refrigerant that flows inside the refrigeration cycle, the heat pump 10 employs carbon dioxide (hereinafter called CO₂ refrigerant). For this reason, in the heat pump 10, the CO₂ refrigerant reaches a supercritical state in the radiator 12. In the refrigeration cycle, the CO₂ refrigerant is compressed to a pressure that exceeds a critical pressure by the compressor 11 (see the transition from point A to point B in FIG. 8), the CO₂ refrigerant is cooled by the radiator 12 and the temperature of the CO₂ refrigerant gradually drops such that the CO₂ refrigerant transitions from a supercritical state to a liquid state (see the transition from point B to point C in FIG. 8), the CO₂ refrigerant is depressurized by the expansion valve 13 (see the transition from point C to point D in FIG. 8), and the CO₂ refrigerant is evaporated by the evaporator 14, becomes a gas and is again sucked into the compressor 11 (see the transition from point D to point A in FIG. 8).

The radiator 12 is configured by a heat transfer tube that is connected to the pipe 31 that extends from the tank 40 and a heat transfer tube that is connected to the refrigerant pipe 15 and through which the CO₂ refrigerant flows, with one of the heat transfer tubes being spirally wrapped around the outer peripheral surface of the other of the heat transfer tubes. Thus, in the radiator 12, heat exchange is performed between the CO₂ refrigerant in a critical state that has been compressed to a high pressure and a high temperature and hot water of a low temperature that has flowed out from the tank 40, heat moves from the CO₂ refrigerant to the hot water, and the hot water is heated.

### <Detailed Configuration of Indoor Radiators such as Radiators for Heating>

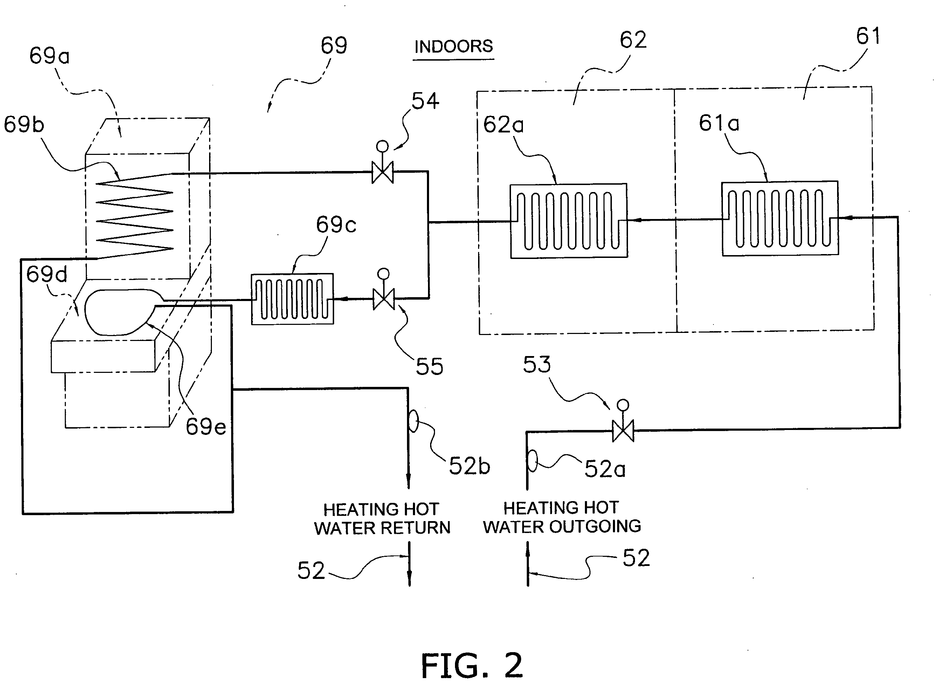

The room radiators 61a and 62a are, as shown in FIG. 2, disposed in the rooms 61 and 62 of the building and fulfill the role of causing the heat that the hot water flowing out from the tank 40 has to radiate into the room air of the rooms 61 and 62. Here, the two room radiators 61a and 62a are exemplified, but this is not intended to limit the numerical quantity. Further, regarding the configuration of the room radiators 61a and 62a also, the room radiators 61a and 62a may be disposed by windows or may be embedded under floors. Moreover, the room radiators 61a and 62a are disposed in series here, but they may also be disposed in parallel.

The bathroom radiators 69b, 69c and 69e comprise a toilet tank radiator portion 69b, a toilet seat radiator portion 69e and a bathroom radiator 69c, and these take in the heat of the hot water in each portion of the bathroom 69. The toilet tank radiator portion 69b is disposed inside the toilet tank 69a that stores rinse water in the bathroom 69, and the toilet tank radiator portion 69b causes the heat that the hot water has to radiate into the rinse water inside the toilet tank 69a. The toilet seat radiator portion 69e is disposed inside the toilet seat 69d of the bathroom 69 and causes the heat that the hot water has to radiate into the toilet seat 69d. The bathroom radiator 69c causes the heat that the hot water has to radiate into the air inside the bathroom 69.

Further, a heating hot water outgoing temperature sensor 52a, a heating hot water return temperature sensor 52b and hot water flow rate regulating valves 53, 54 and 55 are disposed in the pipe 52 that joins together the tank 40, the room radiators 61a and 62a and the bathroom radiators 69b, 69c and 69e to form a loop.

### <Detailed Configuration Relating to Hot Water Supplying Function>

### (Configuration Relating to Normal Hot Water Supply)

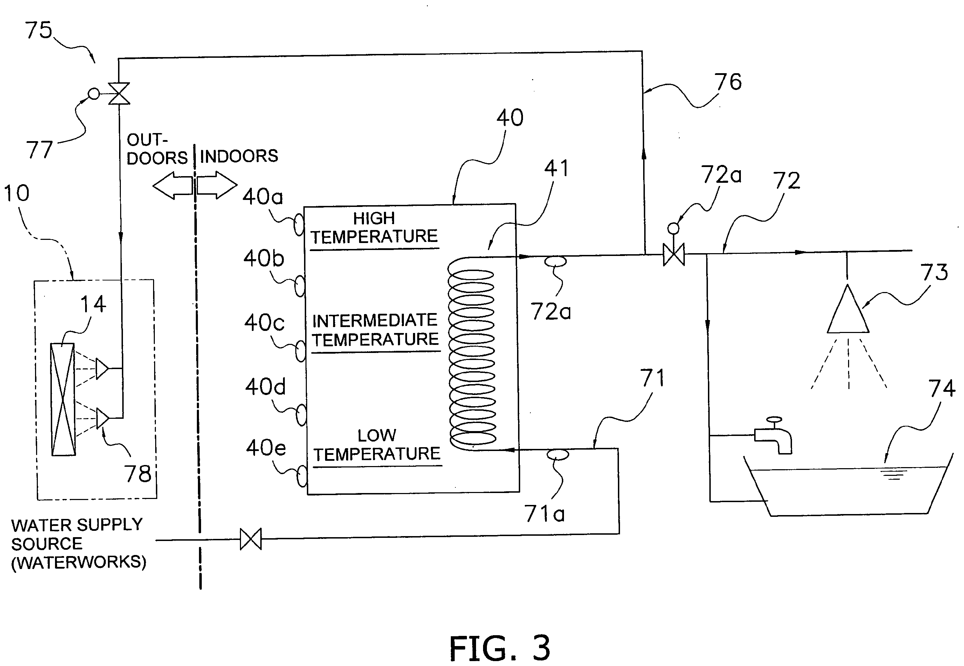

The hot water supply-use heat exchanger 41 with which the tank 40 is equipped is a water heat exchanger that uses copper tubes or stainless steel tubes as the heat transfer tubes, and, as shown in FIG. 3, a water supply pipe 71 that extends from the water supply source (waterworks) and the hot water supply pipe 72 for supplying hot water to the shower 73 and the bathtub 74 are connected to the hot water supply-use heat exchanger 41. The water supply pipe 71 introduces water of ordinary temperature to the lower end of the hot water supply-use heat exchanger 41. The ordinary temperature water that has been introduced from the water supply pipe 71 to the hot water supply-use heat exchanger 41 takes heat from the hot water inside the tank 40 while moving upward, becomes heated water of a high temperature that has been heated, and is discharged to the hot water supply pipe 72. A water supply pipe temperature sensor 71a is disposed in the water supply pipe 71, and a hot water supply pipe temperature sensor 72a is disposed in the hot water supply pipe 72. For example, the water supply pipe temperature sensor 71a detects a waterworks water temperature of 5°C, and the hot water supply pipe temperature sensor 72a detects a heated water temperature of 45°C. Further, a hot water supply-use valve (open/close operation valve) 72a that is an electromagnetic valve is installed in the hot water supply pipe 72.

It will be noted that, although it is not illustrated, the heated water that is supplied to the shower 73 and the bathtub 74 is mixed with the waterworks water by a mixing valve such that the temperature of the heated water is regulated, and the heated water whose temperature has been regulated is sent to the shower 73 and the bathtub 74.

### (Configuration Utilizing Hot Water Supply for Defrosting)

The aforementioned heated water spraying device 75 guides the heated water that has been heated by the hot water supply-use heat exchanger 41 and supplied to the hot water supply pipe 72 to the evaporator 14 of the heat pump 10 outdoors and sprays the surface of the evaporator 14 with the heated water. The heated water spraying device 75 is configured by a spraying-use pipe 76 that branches from the hot water supply pipe 72 and extends outdoors, a defrosting-use valve (open/close operation valve) 77 that is disposed in the middle of the spraying-use pipe 76, and a defrosting-use nozzle 78 that is disposed on the distal end portion of the spraying-use pipe 76 and sprays the heated water toward the evaporator 14. Although it will be described later, the heated water spraying device 75 sprays some of the heated water toward the evaporator 14 at a predetermined period when defrosting of the evaporator 14 is necessary. The defrosting-use valve 77 is, similar to the aforementioned hot water supply-use valve 72a, an electromagnetic valve and is opened on the basis of a command of the comprehensive controller 29 when spraying of the evaporator 14 with water is necessary.

### <Detailed Configuration of Control Unit 20>

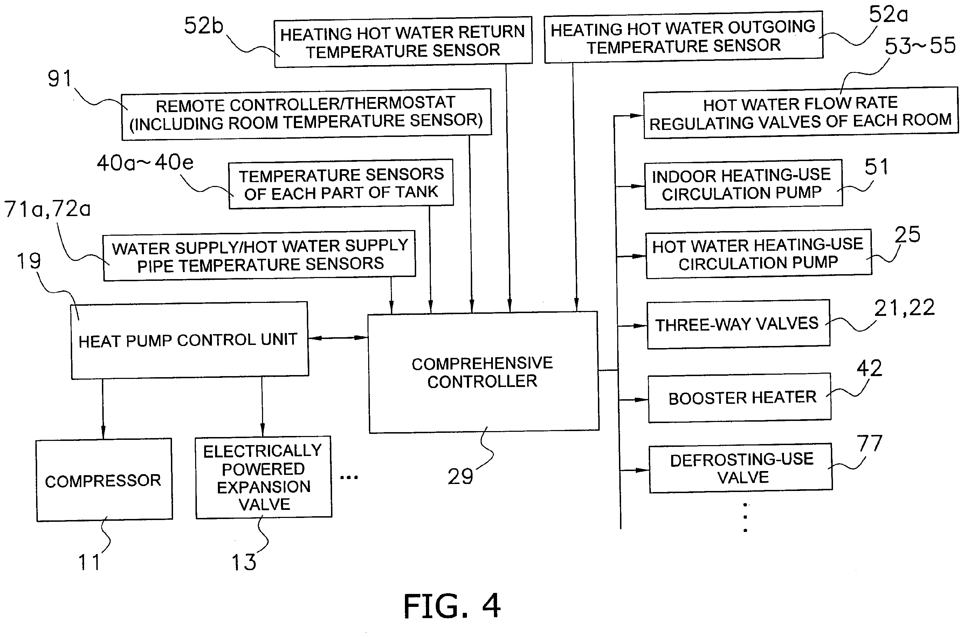

The comprehensive controller 29 controls, as shown in FIG. 1 and FIG. 4, devices incidental to the heat pump 10 and devices incidental to the tank 40 on the basis of signals inputted from the outside. The comprehensive controller 29 is housed inside a casing together with three-way valves 21 and 22 and the hot water heating-use circulation pump 25 to form the one control unit 20 (see FIG. 1).

The three-way valves 21 and 22 are disposed in order to regulate from which portion in the height direction of the tank 40 the hot water is to be drawn out and sent to the room radiators 61a and 62a and the like and to regulate to which portion in the height direction of the tank 40 the hot water of a low temperature that returns from the bathroom radiators 69b, 69c and 69e is to be returned. The three-way valves 21 and 22 are actuated by an instruction from the comprehensive controller 29.

The comprehensive controller 29 controls the three-way valves 21 and 22, the booster heater 42, the heat pump control unit 19, the indoor heating-use circulation pump 51, the hot water heating-use circulation pump 25, the hot water flow rate regulating valves 53 to 55 and the defrosting-use valve 77 and the like. Further, the comprehensive controller 29 receives signals of measurement results from the heating hot water outgoing temperature sensor 52a, the heating hot water return temperature sensor 52b, the temperature sensors 40a to 40e of the tank 40, the water supply pipe temperature sensor 71a and the hot water supply pipe temperature sensor 72a and the like and also receives room temperature and room setting temperature information and the like from a remote controller/thermostat 91 with which the rooms 61 and 62 and the like are equipped.

### <Regarding Energy Conservation Control Utilizing Building Skeleton Heat Storage>

The hot water circulation heating system is equipped with, and imparts to the comprehensive controller 29, energy conservation control utilizing building skeleton heat storage in the case that the hot water circulation heating system is installed in a building such as a house whose outer walls or the like are configured by a material whose heat storability is high, such as brick or stone. When the system uses this energy conservation control utilizing building skeleton heat storage, it can perform an extremely high level of energy conservation operation.

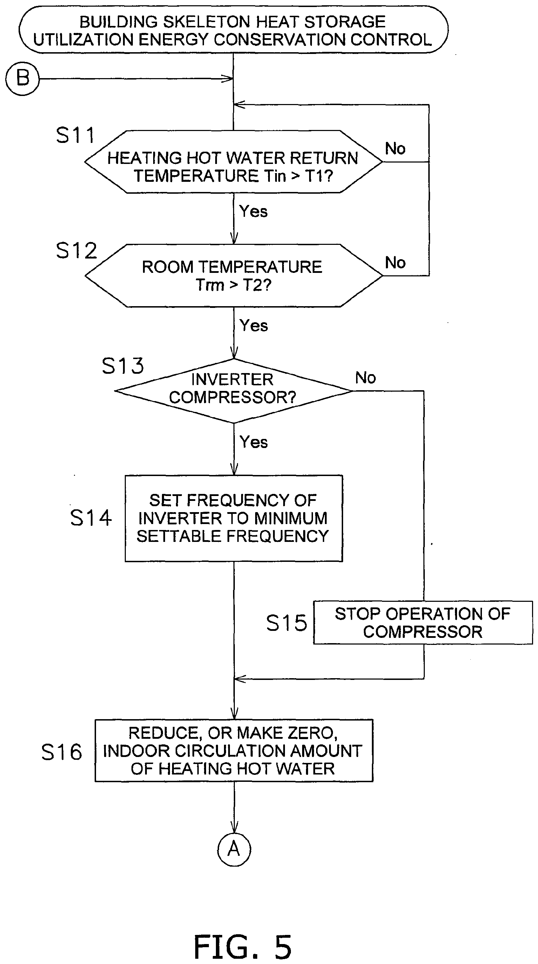

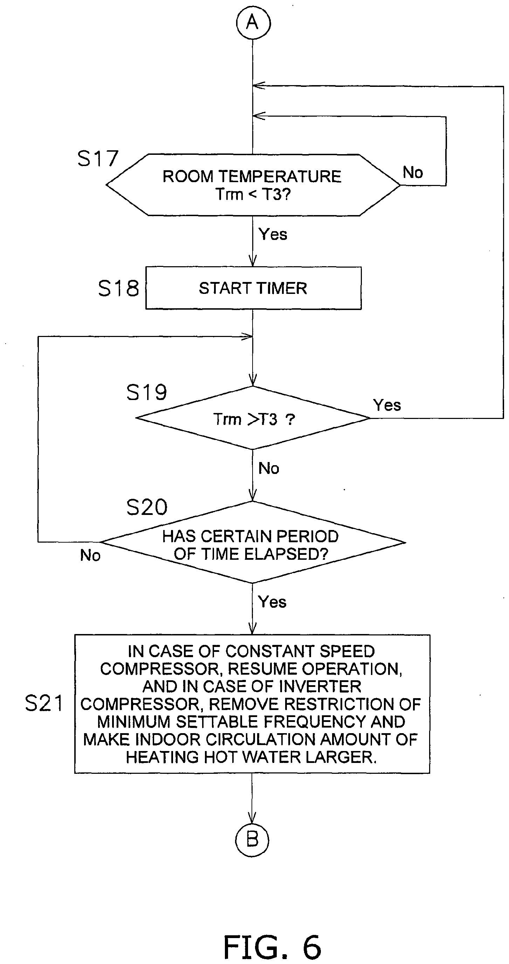

FIG. 5 and FIG. 6 show a simplified control flow of the energy conservation control utilizing building skeleton heat storage. Here, the energy conservation control utilizing building skeleton heat storage will be described on the basis of this control flow.

In step S11, first, the comprehensive controller 29 determines whether or not a heating hot water return temperature Tin that is the measured value of the heating hot water return temperature sensor 52b is greater than a first setting temperature T1. Although it is conceivable for the first setting temperature T1 to be determined on the basis of the temperature of the waterworks water or the like, the first setting temperature T1 is set to 20°C, for example. When the comprehensive controller 29 makes a determination of NO in step S11, it does not proceed to step S12 and beyond. This is because it is judged that hot water whose temperature has dropped sufficiently is returning to the tank 40 and that the thermal efficiency of the heat pump 10 can be kept high. When the comprehensive controller 29 makes a determination of YES in step S11, it proceeds to step S12.

In step S12, the comprehensive controller 29 determines whether or not a room temperature Trm that has been received from the remote controller/thermostat 91 is greater than a second setting temperature T2. The second setting temperature T2 is, for example, set to a temperature that is slightly higher than a room setting temperature by a user that is received from the remote controller/thermostat 91. When the comprehensive controller 29 makes a determination of NO in step S12, it returns to step S11 without proceeding to step S13 and beyond. This is because the room temperature ends up dropping even more when the system drops the capacity of the heat pump 10 such as when the room temperature falls below the setting temperature of the user. When the comprehensive controller 29 makes a determination of YES in step S12, it proceeds to step S13.

In step S13, the comprehensive controller 29 determines whether or not the compressor 11 of the heat pump 10 is an inverter compressor or a constant speed compressor. In the case of an inverter compressor, the comprehensive controller 29 proceeds to step S14 and sets the inverter frequency to a settable minimum frequency. On the other hand, in the case of a constant speed compressor, the comprehensive controller 29 proceeds to step S15 and stops operation of the compressor 11. Moreover, after steps S14 and S15, in step S16, the comprehensive controller 29 makes the opening of the hot water flow rate regulating valve 53 smaller to bring the quantity of the hot water for heating that circulates between the tank 40 and the room radiators 61a and 62a and the bathroom radiators 69b, 69c and 69e to zero or closer to zero. By restricting the circulation quantity in this manner, the quantity of energy that the compressor 11 consumes becomes smaller. However, the quantity of the hot water that is sent out from the tank 40 to the room radiators 61a and 62a also becomes smaller, so the temperature of the hot water inside the tank 40 does not drop that much. Further, if the building is a building whose heat storability is high, when the inside of the building including the building skeleton becomes warm once, the warmth is kept for a while even when the system drops the capacity of the heat pump 10.

After step S16, the comprehensive controller 29 transitions to step S17. In step S17, the comprehensive controller 29 determines whether or not the room temperature Trm is below a third setting temperature T3. The third setting temperature T3 is a temperature that is lower than the second setting temperature T2 and is ordinarily set to a temperature that is slightly lower than the room setting temperature by the user that is received from the remote controller/thermostat 91. When the comprehensive controller 29 makes a determination of NO in step S16, it does not proceed to the next step S18. This is because the warmth inside the building can be kept by the heat that is stored in the building skeleton without the system raising the capacity of the heat pump 10.

When the comprehensive controller 29 makes a determination of YES in step S17, it starts a timer in step S18 and proceeds to step S19. In step S19, the comprehensive controller 29 determines whether or not the room temperature Trm is greater than the third setting temperature T3. When the comprehensive controller 29 makes a determination of YES in step S19, it returns to step S17. When the comprehensive controller 29 makes a determination of NO in step S19, it proceeds to step S20 and determines whether or not a certain period of time has elapsed after the start of the timer. When the comprehensive controller 29 makes a determination of NO in step S20, it returns to step S19. After step S17, if the room temperature Trm again becomes larger than the third setting temperature T3, it is not necessary for the system to raise the capacity of the heat pump 10, and raising the capacity of the heat pump 10 is desired only when the room temperature Trm continues to be smaller for a certain period of time than the third setting temperature T3, so the processing of these steps S18 to S20 is performed.

When a state where the room temperature Trm is smaller than the third setting temperature T3 continues for a certain period of time, the comprehensive controller 29 makes a determination of YES in step S20 and proceeds to step S21. In step S21, the comprehensive controller 29 cancels the processing that was performed in step S14 or in step S15 and step S16. That is, in step S21, when the compressor 11 is a constant speed compressor, the comprehensive controller 29 causes the compressor 11 to resume operation, and when the compressor 11 is an inverter compressor, the comprehensive controller 29 causes the frequency of the compressor 11 to follow normal control and cancels the processing of step S14 where the inverter frequency had been set to the settable minimum frequency. Further, in step S21, the comprehensive controller 29 makes the opening of the hot water flow rate regulating valve 53 larger. Thus, the room temperature Trm that had been smaller than the third setting temperature T3 gradually rises.

### <Defrosting Operation of Heat Pump 10>

As mentioned above, the heated water spraying device 75 guides the heated water that has taken the heat of the hot water inside the tank 40 in the hot water supply-use heat exchanger 41 and has been supplied to the hot water supply pipe 72 to the evaporator 14 of the outdoor heat pump 10 and sprays the surface of the evaporator 14 with the heated water. This spraying is implemented at a predetermined period as a result of the defrosting-use valve 77 opening and closing by an instruction from the comprehensive controller 29 that transmits signals to and receives signals from the heat pump control unit 19 when defrosting of the evaporator 14 is necessary. Thus, frost adhering to the evaporator 14 is melted and the thermal efficiency of the heat pump 10 improves.

It will be noted that the way of thinking when defrosting is necessary is the same as the way of thinking in a refrigeration cycle that uses a conventional fluorocarbon as a refrigerant.

### <Characteristics of Hot Water Circulation Heating System>

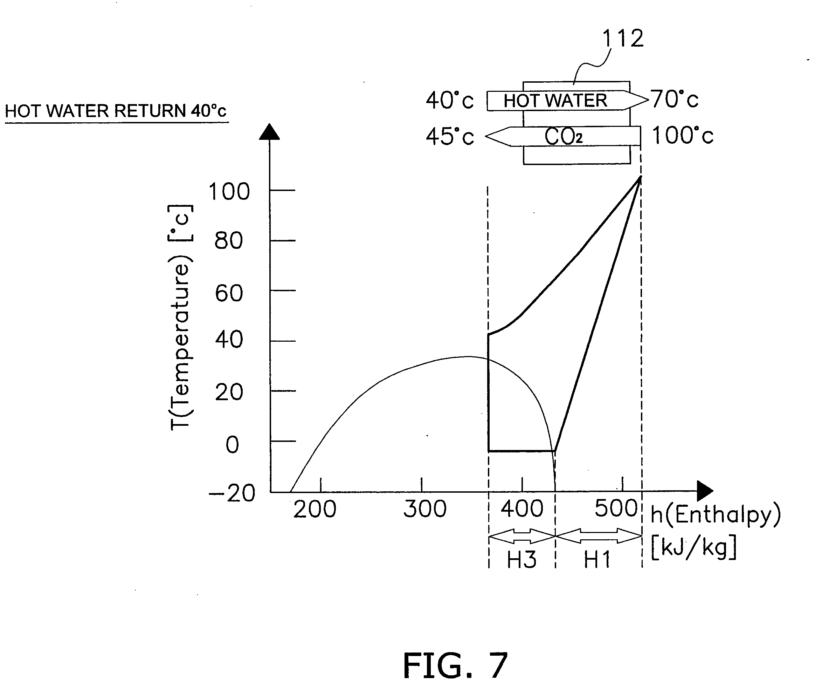

(1) The present system employs a configuration where the hot water in the tank 40 is guided to the heat pump 10 by the hot water heating-use circulation pump 25 and where the hot water that has been heated by the heat pump 10 is returned back to the tank 40, with the heat pump 10 being installed outdoors and the tank 40 being installed indoors. For this reason, the tank 40 is not exposed to cold air outdoors, a drop in the temperature of the hot water inside the tank 40 is controlled, and heat can be taken from the air outdoors (outside air) by the heat pump 10. Consequently, in the present system, a large quantity of hot water of a high temperature can be efficiently ensured in the tank 40.
(2) In the present system, the comprehensive controller 29 controls devices incidental to the heat pump 10 and the tank 40 (the three-way valves 21 and 22, the booster heater 42, the heat pump control unit 19, the compressor 11, the expansion valve 13, the indoor heating-use circulation pump 51, the hot water heating-use circulation pump 25, the hot water flow rate regulating valves 53 to 55, the defrosting-use valve 77, etc.) on the basis of information such as room temperature and room setting temperature information received from the remote controller/thermostat 91 with which the rooms 61 and 62 and the like are equipped and information from the temperature sensors 40a to 40e of the tank 40. Thus, the heat pump 10 can be optimally operated.
(3) When the room temperature of the rooms 61 and 62 and the like rises, the temperature of the building skeleton of the building also rises, and the system moves to a state where it can maintain the room temperature of the rooms 61 and 62 even when the capacity of the hot water circulation heating system is made smaller.
   In light of this, when the compressor 11 is a constant speed compressor, the present system is, as shown in the control flow of FIG. 5 and FIG. 6, configured to stop the compressor 11 and cause the heat pump 10 to stop operation when the temperature Tin of the hot water that returns from the room radiators 61a and 62a to the tank 40 is higher than the first setting temperature T1 and the room temperature Trm of the rooms 61 and 62 is higher than the second setting temperature T2. Thus, the system can conserve energy. Further, when the system continues to stop operation of the heat pump 10, the room temperature Trm of the rooms 61 and 62 gradually drops even if there is stored heat in the building skeleton, so the system causes the compressor 11 of the heat pump 10 to resume operation when the room temperature Trm continues to be lower for a certain period of time than the third setting temperature T3. Thus, the system can conserve energy and ensure that the room temperature Trm of the rooms 61 and 62 does not drop too much.
   Similarly, when the compressor 11 is an inverter compressor, the present system is, as shown in the control flow of FIG. 5 and FIG. 6, configured to set the inverter frequency of the compressor 11 to the settable minimum frequency and drop the capacity of the heat pump 10 when the temperature Tin of the hot water that returns from the room radiators 61a and 62a to the tank 40 is higher than the first setting temperature T1 and the room temperature Trm of the rooms 61 and 62 is higher than the second setting temperature T2. Thus, the system can conserve energy. Further, when the system continues to hold the capacity of the heat pump 10 low, the room temperature Trm of the rooms 61 and 62 gradually drops even if there is stored heat in the building skeleton, so the system returns the inverter frequency of the compressor 11 to a state following normal control when the room temperature Trm continues to be lower for a certain period of time than the third setting temperature T3. Thus, the system can conserve energy and ensure that the room temperature Trm of the rooms 61 and 62 does not drop too much.
   It will be noted that the above-described characteristic of the present system becomes particularly effective in a building such as a house whose building skeleton heat storage quantity is large and which is difficult to become cool after it has been warmed once.
(4) A heat pump has the characteristic that, usually, the thermal efficiency of the heat pump improves the wider the temperature change range of the heating target is. When this is applied to the present system, for example, in regard to the hot water in the tank 40, the thermal efficiency of the heat pump 10 in a case where the heat pump 10 heats hot water of 10°C to 70°C is much greater than the thermal efficiency of the heat pump 10 in a case where the heat pump 10 heats hot water of 40°C to 70°C (see FIG. 7 and FIG. 8).
   As shown in FIG. 7, in a case where the heat pump 10 heats hot water of 40°C to 70°C, H3, which corresponds to the portion that is taken in from the outside air by the evaporator 14, is a relatively small value with respect to HI, which corresponds to the workload of the compressor 11; by comparison, as shown in FIG. 8, in a case where the heat pump 10 heats hot water of 10°C to 70°C, H2, which corresponds to the portion that is taken in from the outside air by the evaporator 14, is a relatively large value with respect to HI, which corresponds to the workload of the compressor 11. In the former case, taking into consideration power generation efficiency when generating electrical energy that is supplied to the compressor 11, the heat pump 10 only generates heat less than 1.0 time its consumption energy, but in the latter case, the heat pump 10 generates heat of 1.2 to 1.4 times its consumption energy.
   In this manner, in a heat pump, and particularly in the heat pump 10 of the present system that employs CO₂ refrigerant, lowering the temperature of the hot water before heating that flows out from the tank 40 to the radiator 12 greatly contributes to improving thermal efficiency.
   In light of this, the present system is configured such that the bathroom 69, which is not a living room, is also equipped with radiators (the bathroom radiators 69b, 69c and 69e), and after the hot water that has exited the tank 40 flows through the room radiators 61a and 62a, the hot water flows through at least any of the bathroom radiators 69b, 69c and 69e. Thus, for example, hot water that enters the room radiators 61a and 62a at 70°C and exits the room radiators 61a and 62a at 40°C passes through the bathroom radiators 69b, 69c and 69e, whereby its temperature drops, and the hot water reaches a state where its temperature has dropped to 10°C, for example, when the hot water returns to the tank 40. That is, the temperature of the hot water that returns to the tank 40 becomes extremely small, and the heat pump 10 that heats the hot water from that temperature to 70°C, for example, can perform heating of the hot water with extremely high thermal efficiency.
   Further, in the present system, an electric heater or the like inside the bathroom 69 that had conventionally been installed separately from the heating system can be omitted. Additionally, the work of heating the inside of the bathroom 69 corresponding to that amount is held by the heat pump 10 whose thermal efficiency is higher than that of an electric heater, so the system can achieve further energy conservation.
   It will be noted that the bathroom 69 has not only the bathroom radiator 69c but also the toilet tank radiator portion 69b that is disposed inside the toilet tank 69a that stores the rinse water and the toilet seat radiator portion 69e that is disposed inside the toilet seat 69d, and an attempt is made to promote a drop in the temperature of the hot water, so the temperature of the hot water that returns to the tank 40 inevitably becomes extremely small.
(5) In light of the characteristic of a heat pump that its thermal efficiency improves the wider the temperature change range of the heating target is, the present system employs a configuration where the hot water supply-use heat exchanger 41 is installed inside the tank 40. Thus, a separate hot water supplier such as a gas hot water supplier is rendered unnecessary, and the heat pump 10 can maintain high thermal efficiency.
   That is, in the present system, the heat of the hot water that is stored in the tank 40 is taken in order to be sent to the room radiators 61a and 62a of the rooms 61 and 62 and perform heating, and that heat is utilized for hot water supply. Specifically, the present system is configured such that the hot water supply-use heat exchanger 41 is installed inside the tank 40 and such that the water from the water supply source takes the heat of the hot water inside the tank 40 when it passes through the hot water supply-use heat exchanger 41. Thus, the temperature of the hot water inside the tank 40 drops, and the heat pump 10 that heats the hot water from that temperature to 70°C, for example, can perform heating of the hot water with extremely high thermal efficiency.
(6) Moreover, the present system employs a configuration where some of the heated water that has been discharged (supplied) from the hot water supply-use heat exchanger 41 inside the tank 40 to the hot water supply pipe 72 is utilized and the heated water is sprayed by the heated water spraying device 75 onto the outer surface of the evaporator 14 of the heat pump 10. The heated water can melt frost adhering to the evaporator 14 because the heated water becomes at least equal to or greater than 40°C.

In this manner, defrosting of the evaporator 14 is performed by the heated water that has been generated utilizing the heat inside the tank 40, so there are no longer situations where, as has conventionally been the case, defrosting operation that reverses the refrigeration cycle and causes the evaporator 14 to act as a radiator is performed and deteriorates the thermal efficiency of the heat pump 10 or where frost adhering to the evaporator 14 is melted by a separate electric heater or the like and raises the quantity of electricity consumption. For this reason, in the present system, further energy conservation can be achieved.

It will be noted that an instruction to spray the evaporator 14 with heated water is not issued from the comprehensive controller 29 when defrosting of the evaporator 14 is not necessary. For this reason, the heat of the hot water inside the tank 40 does not end up being needlessly consumed.

### <Modifications>

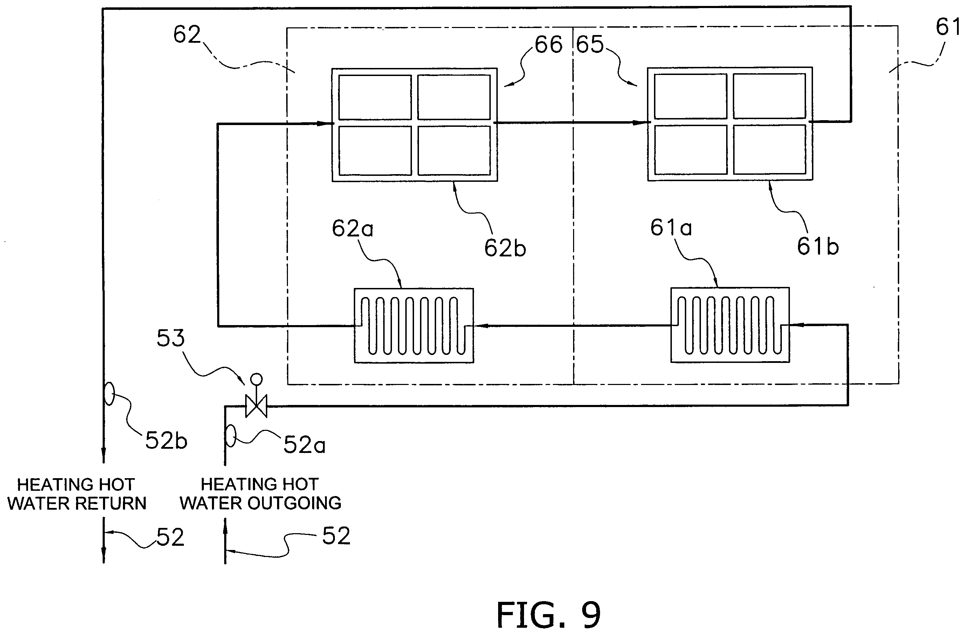

(A) The above-described hot water circulation heating system is configured such that the bathroom 69, which is not a living room, is also equipped with radiators (the bathroom radiators 69b, 69c and 69e), and after the hot water that has exited the tank 40 flows through the room radiators 61a and 62a, the hot water flows through at least any of the bathroom radiators 69b, 69c and 69e, but the heat pump 10 can be operated at high thermal efficiency even when the system employs the following configuration instead of this configuration.
   Here, as shown in FIG. 9, an indoor hot water circulation path is formed such that the hot water that has exited the tank 40 flows through the room radiators 61a and 62a, thereafter flows through window frame radiators 61b and 62b, and is returned from there to the tank 40. The window frame radiators 61b and 62b are formed in window frames of windows 65 and 66 of the building and cause the heat that the hot water has to radiate into the air in the vicinities of the windows 65 and 66 (air on the inside of the windows 65 and 66 and air on the outside of the windows 65 and 66). The window frame radiators 61b and 62b may be pipes that are housed inside the window frames or may be the window frames themselves that double as glass window holders and hot water flow paths. The other configurations of the hot water circulation heating system are the same as the aforementioned configurations shown in FIG. 1, FIG. 3 and FIG. 4.
   In this hot water circulation heating system also, the hot water inside the tank 40 is heated by actuation of the heat pump 10, and this hot water is sent to the room radiators 61a and 62a and the window frame radiators 61b and 62b in the rooms 61 and 62 by actuation of the indoor heating-use circulation pump 51. Then, the heat of the hot water moves to the room air of the rooms 61 and 62 and to the air around the window frame radiators 61b and 62b, and the rooms 61 and 62 are heated. Then, the hot water whose temperature has dropped returns back to the tank 40. This hot water whose temperature has dropped is again heated to a high temperature by actuation of the heat pump 10.
   Additionally, the hot water circulation heating system is configured such that the window frame radiators 61b and 62b are disposed in the window frames of the windows 65 and 66 of the building and such that the hot water that has exited the tank 40 flows through the room radiators 61a and 62a and thereafter flows through the window frame radiators 61b and 62b, so, for example, hot water that enters the room radiators 61a and 62a at 70°C and exits the room radiators 61a and 62a at 40°C passes through the window frame radiators 61b and 62b, whereby its temperature falls further, and the hot water reaches a state where its temperature has dropped to 10°C, for example, when the hot water returns to the tank 40. Then, the temperature of the hot water that returns to the tank 40 becomes extremely low, and the heat pump 10 that heats the hot water from that temperature to 70°C, for example, can perform heating of the hot water with extremely high thermal efficiency.
   Moreover, in the case of the present system, useful effects are also obtained in that the temperature of cold air that conventionally had come in from the windows 65 and 66 is mitigated by heat emitted from the window frame radiators 61b and 62b such that a drop in the temperature in the rooms 61 and 62 is controlled and temperature deviation in each part of the rooms 61 and 62 is controlled.
(B) The above-described hot water circulation heating system is a system that has both a heating function and a hot water supplying function but does not include a cooling function.
   However, by removing the hot water supplying function, reversing the refrigeration cycle of the heat pump 10 with a four-way switch valve or the like, and making it possible to store cold water rather than hot water inside the tank 40, the system can also be used as a system that performs cooling by causing cold water to circulate indoors.
(C) The above-described hot water circulation heating system uses CO₂ refrigerant as a refrigerant of the heat pump 10, but the present invention is also effective in a hot water circulation heating system that uses an HFC fluorocarbon refrigerant such as R410A, R407C or R32, a hot water circulation heating system that uses a fluorocarbon refrigerant whose GWP (Global Warming Potential) is equal to or less than 200, and a hot water circulation heating system that uses an HC natural refrigerant such as propane or butane.

## Claims

1. A hot water circulation heating system that performs heating by causing hot water to circulate in a building, the system comprising:
a tank (40) that stores the hot water;
a room radiator (61a, 62a) that is disposed in a room (61, 62) of the building and causes heat that the hot water has to radiate into room air of the room;
a first circulation pump (51) that causes the hot water to flow from the tank to the room radiator and returns the hot water that has performed heat radiation in the room radiator back to the tank;
a vapor compression heat pump (10) for heating the hot water; and
a second circulation pump (25) that causes the hot water to flow from the tank to the heat pump and returns the hot water from the heat pump back to the tank,
wherein the heat pump includes a compressor (11), a radiator (12), an expansion mechanism (13) and an evaporator (14) and heats the hot water that flows out from the tank by heat emitted from the radiator, and
**characterized in that** the tank (40) includes a hot water supply-use heat exchanger (41) disposed inside the tank and causing heat exchange between water taken in from a water supply source and the hot water inside the tank (40), such that the water taken in from the water supply source and the hot water inside the tank (40) do not mix with each other, wherein the hot water supply-use heat exchanger (41) is configured to heat the water taken in from the water supply source and to supply the hot water to a hot water supply pipe (72) of the building.

2. The hot water circulation heating system according to claim 1, wherein
the heat pump is installed outdoors, and
the tank is installed indoors.

3. The hot water circulation heating system according to claim 1 or 2, further comprising a controller (29) that controls a device incidental to the heat pump and a device incidental to the tank on the basis of signals inputted from the outside.

4. The hot water circulation heating system according to any of claims 1 to 3, wherein the hot water circulation heating system is configured to be operable such that
operation of the heat pump stops when the temperature of the hot water that returns from the room radiator to the tank is higher than a first setting temperature (T1) and a room temperature (Trm) of the room is higher than a second setting temperature (T2), and such that
operation of the heat pump is resumed when the room temperature of the room becomes lower than a third setting temperature (T3) that is lower than the second setting temperature or when the room temperature of the room continues to be lower for a certain period of time than the third setting temperature that is lower than the second setting temperature.

5. The hot water circulation heating system according to any of claims 1 to 3, wherein
the compressor of the heat pump is capable of having its capacity varied by inverter control,
wherein the hot water circulation heating system is configured to be operable such that
first control to bring an inverter frequency of the compressor close to a minimum frequency is performed when the temperature of the hot water that returns from the room radiator to the tank is higher than a first setting temperature (T1) and a room temperature (Trm) of the room is higher than a second setting temperature (T2), and such that
the system cancels the first control when the room temperature of the room becomes lower than a third setting temperature (T3) that is lower than the second setting temperature or when the room temperature of the room continues to be lower for a certain period of time than the third setting temperature that is lower than the second setting temperature.

6. The hot water circulation heating system according to claim 5, wherein the hot water circulation heating system is configured to be operable such that the first control sets the inverter frequency of the compressor to the minimum frequency.

7. The hot water circulation heating system according to any of claims 1 to 6, wherein the heat pump uses carbon dioxide as a refrigerant.

8. The hot water circulation heating system according to any of claims 1 to 6, wherein the heat pump uses a fluorocarbon refrigerant as a refrigerant.

9. The hot water circulation heating system according to any of claims 1 to 6, wherein the heat pump uses a fluorocarbon refrigerant whose global warming potential is equal to or less than 200 as a refrigerant.

10. The hot water circulation heating system according to any of claims 1 to 6, wherein the heat pump uses an HC refrigerant that is a natural refrigerant as a refrigerant.

## Patentansprüche

1. Warmwasserzirkulationssystem zum Heizen, das Heizen durch Veranlassen, dass heißes Wasser in einem Gebäude zirkuliert, durchführt, wobei das System umfasst:
einen Tank (40), der das heiße Wasser speichert;
einen Raumheizkörper (61a, 62a), der in einem Raum (61, 62) des Gebäudes angeordnet ist und Wärme erzeugt, die das heiße Wasser in die Raumluft des Raumes abstrahlen muss;
eine erste Zirkulationspumpe (51), die bewirkt, dass das heiße Wasser von dem Tank zu dem Raumheizkörper strömt, und das heiße Wasser, das die Wärmeabstrahlung in dem Raumheizkörper ausgeführt hat, zu dem Tank zurückführt;
eine Dampfkompressionswärmepumpe (10) zum Erwärmen des heißen Wassers; und
eine zweite Zirkulationspumpe (25), die bewirkt, dass das heiße Wasser von dem Tank zu der Wärmepumpe strömt, und das heiße Wasser von der Wärmepumpe zu dem Tank zurückführt,
wobei die Wärmepumpe einen Kompressor (11), einen Heizkörper (12), einen Expansionsmechanismus (13) und einen Verdampfer (14) aufweist und das heiße Wasser, das aus dem Tank strömt, durch die von dem Heizkörper emittierte Hitze erwärmt und
**dadurch gekennzeichnet, dass** der Tank (40) einen Wärmetauscher (41) für die Warmwasserzufuhr aufweist, der innerhalb des Tanks angeordnet ist und einen Wärmeaustausch zwischen Wasser, das einer Wasserversorgungsquelle entnommen wird, und dem heißen Wasser innerhalb des Tanks (40) bewirkt, sodass sich das Wasser, das der Wasserversorgungsquelle entnommen wird, und das heiße Wasser innerhalb des Tanks (40) nicht vermischen, wobei der Wärmetauscher (41) für die Warmwasserzufuhr konfiguriert ist, das Wasser, das der Wasserversorgungsquelle entnommen wird, zu erwärmen und das heiße Wasser einer Heißwasserzuführleitung (72) des Gebäudes zuzuführen.

2. Warmwasserzirkulationssystem zum Heizen nach Anspruch 1, wobei die Wärmepumpe draußen installiert ist und
der Tank drinnen installiert ist.

3. Warmwasserzirkulationssystem zum Heizen nach Anspruch 1 oder 2, weiter umfassend eine Steuerung (29), die eine Vorrichtung, die mit der Wärmepumpe verbunden ist, und eine Vorrichtung, die mit dem Tank verbunden ist, auf Basis von Signalen steuert, die von außen eingegeben werden.

4. Warmwasserzirkulationssystem zum Heizen nach einem der Ansprüche 1 bis 3, wobei das Warmwasserzirkulationssystem zum Heizen konfiguriert ist, betrieben zu werden, sodass
der Betrieb der Wärmepumpe stoppt, wenn die Temperatur des heißen Wassers, das vom Raumheizkörper zum Tank zurückkehrt, höher als eine erste Einstelltemperatur (T1) ist, und eine Raumtemperatur (Trm) des Raums höher als eine zweite Einstelltemperatur (T2) ist, sodass
der Betrieb der Wärmepumpe erneut aufgenommen wird, wenn die Raumtemperatur des Raums niedriger als eine dritte Einstelltemperatur (T3) wird, die niedriger als die zweite Einstelltemperatur ist, oder wenn die Raumtemperatur des Raums für eine bestimmte Zeitdauer weiterhin niedriger als die dritte Einstelltemperatur ist, die niedriger als die zweite Einstelltemperatur ist.

5. Warmwasserzirkulationssystem zum Heizen nach einem der Ansprüche 1 bis 3, wobei
der Kompressor der Wärmepumpe seine Kapazität durch die Wechselrichtersteuerung variieren kann,
wobei das Warmwasserzirkulationssystem zum Heizen konfiguriert ist, betrieben zu werden, sodass
eine erste Steuerung durchgeführt wird, die eine Wechselrichterfrequenz des Kompressors in die Nähe einer minimalen Frequenz bringt, wenn die Temperatur des heißen Wassers, das vom Raumheizkörper zum Tank zurückkehrt, höher als eine erste Einstelltemperatur (T1) ist, und eine Raumtemperatur (Trm) des Raums höher als eine zweite Einstelltemperatur (T2) ist, und sodass
das System die erste Steuerung abbricht, wenn die Raumtemperatur des Raums niedriger als eine dritte Einstellungstemperatur (T3) wird, die niedriger als die zweite Einstelltemperatur ist, oder wenn die Raumtemperatur des Raums für eine bestimmte Zeitdauer weiterhin niedriger als die dritte Einstelltemperatur ist, die niedriger als die zweite Einstelltemperatur ist.

6. Warmwasserzirkulationssystem zum Heizen nach Anspruch 5, wobei das Warmwasserzirkulationssystem zum Heizen konfiguriert ist, betrieben zu werden, sodass die erste Steuerung die Wechselrichterfrequenz des Kompressors auf die minimale Frequenz einstellt.

7. Warmwasserzirkulationssystem zum Heizen nach einem der Ansprüche 1 bis 6, wobei die Wärmepumpe Kohlendioxid als Kältemittel verwendet.

8. Warmwasserzirkulationssystem zum Heizen nach einem der Ansprüche 1 bis 6, wobei die Wärmepumpe Fluorkohlenwasserstoff-Kältemittel als Kältemittel verwendet.

9. Warmwasserzirkulationssystem zum Heizen nach einem der Ansprüche 1 bis 6, wobei die Wärmepumpe Fluorkohlenwasserstoff-Kältemittel verwendet, dessen Treibhauspotential als Kältemittel gleich oder kleiner als 200 ist.

10. Warmwasserzirkulationssystem zum Heizen nach einem der Ansprüche 1 bis 6, wobei die Wärmepumpe ein HC-Kältemittel, das ein natürliches Kältemittel ist, als Kältemittel verwendet.

## Revendications

1. Système de chauffage à circulation d'eau chaude qui assure le chauffage en faisant circuler de l'eau chaude dans un bâtiment, le système comprenant :
un réservoir (40) qui stocke l'eau chaude ;
un radiateur de pièce (61a, 62a) qui est disposé dans une pièce (61, 62) du bâtiment et amène la chaleur que possède l'eau chaude à rayonner dans l'air ambiant de la pièce ;
une première pompe de circulation (51) qui amène l'eau chaude à s'écouler du réservoir vers le radiateur de pièce et renvoie l'eau chaude qui a opéré le rayonnement de chaleur dans le radiateur de pièce vers le réservoir ;
une pompe à chaleur à compression de vapeur (10) pour chauffer l'eau chaude ; et
une seconde pompe de circulation (25) qui amène l'eau chaude à s'écouler du réservoir vers la pompe à chaleur et renvoie l'eau chaude de la pompe à chaleur vers le réservoir ;
dans lequel la pompe à chaleur inclut un compresseur (11), un radiateur (12), un mécanisme de détente (13) et un évaporateur (14) et chauffe l'eau chaude qui s'écoule à partir du réservoir au moyen de la chaleur émise à partir du radiateur, et
**caractérisé en ce que** le réservoir (40) inclut un échangeur de chaleur à alimentation-utilisation d'eau chaude (41) disposé à l'intérieur du réservoir et amenant l'échange de chaleur entre l'eau prélevée d'une source d'alimentation en eau et l'eau chaude à l'intérieur du réservoir (40), de telle sorte que l'eau prélevée de la source d'alimentation en eau et l'eau chaude à l'intérieur du réservoir (40) ne se mélangent pas l'une à l'autre, dans lequel l'échangeur de chaleur à alimentation-utilisation d'eau chaude (41) est configuré pour chauffer l'eau prélevée de la source d'alimentation en eau et pour fournir l'eau chaude à une conduite d'alimentation en eau chaude (72) du bâtiment.

2. Système de chauffage à circulation d'eau chaude selon la revendication 1, dans lequel
la pompe à chaleur est installée à l'extérieur ; et
le réservoir est installé à l'intérieur.

3. Système de chauffage à circulation d'eau chaude selon la revendication 1 ou 2, comprenant en outre une unité de commande (29) qui commande un dispositif incident sur la pompe à chaleur et un dispositif incident sur le réservoir sur la base de signaux entrés depuis l'extérieur.

4. Système de chauffage à circulation d'eau chaude selon l'une quelconque des revendications 1 à 3, dans lequel le système de chauffage à circulation d'eau chaude est configuré pour être utilisable de telle sorte que
le fonctionnement de la pompe à chaleur s'arrête lorsque la température de l'eau chaude qui revient du radiateur de pièce au réservoir est supérieure à une première température de consigne (T1) et une température ambiante (Trm) de la pièce est supérieure à une deuxième température de consigne (T2), et de telle sorte que :
le fonctionnement de la pompe à chaleur reprend lorsque la température ambiante de la pièce devient inférieure à une troisième température de consigne (T3) qui est inférieure à la deuxième température de consigne ou lorsque la température ambiante de la pièce reste inférieure pendant une certaine période de temps à la troisième température de consigne qui est inférieure à la deuxième température de consigne.

5. Système de chauffage à circulation d'eau chaude selon l'une quelconque des revendications 1 à 3, dans lequel
le compresseur de la pompe à chaleur peut voir sa capacité varier par commande d'inverseur,
dans lequel le système de chauffage à circulation d'eau chaude est configuré pour être utilisable de telle sorte que
une première commande pour amener une fréquence d'inverseur du compresseur proche d'une fréquence minimale est effectuée lorsque la température de l'eau chaude qui revient du radiateur de pièce au réservoir est supérieure à une première température de consigne (T1) et une température ambiante (Trm) de la pièce est supérieure à une deuxième température de consigne (T2), et de telle sorte que
le système annule la première commande lorsque la température ambiante de la pièce devient inférieure à une troisième température de consigne (T3) qui est inférieure à la deuxième température de consigne ou lorsque la température ambiante de la pièce reste inférieure pendant une certaine période de temps à la troisième température de consigne qui est inférieure à la deuxième température de consigne.

6. Système de chauffage à circulation d'eau chaude selon la revendication 5, dans lequel le système de chauffage à circulation d'eau chaude est configuré pour être utilisable de telle sorte que la première commande règle la fréquence d'inverseur du compresseur à la fréquence minimale.

7. Système de chauffage à circulation d'eau chaude selon l'une quelconque des revendications 1 à 6, dans lequel la pompe à chaleur utilise du dioxyde de carbone en tant que réfrigérant.

8. Système de chauffage à circulation d'eau chaude selon l'une quelconque des revendications 1 à 6, dans lequel la pompe à chaleur utilise un réfrigérant fluorocarboné en tant que réfrigérant.

9. Système de chauffage à circulation d'eau chaude selon l'une quelconque des revendications 1 à 6, dans lequel la pompe à chaleur utilise un réfrigérant fluorocarboné dont le potentiel de réchauffement global est inférieur ou égal à 200 en tant que réfrigérant.

10. Système de chauffage à circulation d'eau chaude selon l'une quelconque des revendications 1 à 6, dans lequel la pompe à chaleur utilise un réfrigérant HC qui est un réfrigérant naturel en tant que réfrigérant.
